# FASCICULE DE BREVET EUROPEEN

(11) **EP 2 792 057 B1**
(45) Date de publication et mention de la délivrance du brevet: **03.05.2017**
(21) Numéro de dépôt: 12820887.3
(22) Date de dépôt: 14.12.2012
(51) Int. Cl.: H02K 33/16

(54) **ACTIONNEUR ELECTROMAGNÉTIQUE**
ELEKTROMAGNETISCHE ANTRIEBSVORRICHTUNG
ELECTROMAGNETIC ACTUATOR

(30) Priorité: 16.12.2011 FR 1103883
(43) Date de publication de la demande: 22.10.2014
(73) Titulaire: F.Q.N.K., 35520 Melesse (FR)
(72) Inventeur: BARBET, Frédéric, F-35520 Melesse (FR)
(74) Mandataire: Thibon-Littaye, Annick
(86) Numéro de dépôt international: PCT/IB2012/002719
(87) Numéro de publication internationale: WO 2013/088235

(56) Documents cités:
- EP-A1- 1 566 879
- DE-A1-102006 049 401
- JP-U- 62 031 780
- US-A- 4 195 277
- US-A- 5 115 772

## Description

L'invention se rapporte au domaine des actionneurs. Elle concerne plus précisément un actionneur électromagnétique.

On connaît des actionneurs électromagnétiques dans lesquels un organe mobile est adapté à coulisser à l'intérieur d'un châssis ferro-magnétique. En créant un champ magnétique dans le châssis, par l'introduction de courant dans des bobines disposées dans chaque module du châssis, on génère des forces de Laplace sur un aimant solidaire de cet organe mobile, et on contrôle ainsi son déplacement linéaire. Le document "US 4 195 277 A" décrit un actionneur électromagnétique selon le préambule de la revendication 1. La présente invention vise à offrir une alternative aux constructions connues d'actionneur électromagnétique, en proposant un actionneur selon la revendication 1.

Ainsi, l'actionneur selon l'invention permet de présenter à la fois un châssis de forme simple et un aimant unique adapté à se déplacer entièrement à l'intérieur du châssis, sans aller au-delà des deux entrefers formés par des interruptions du circuit réalisées sur l'axe de déplacement dans une même et unique boucle simple de circuit magnétique. On obtient de la sorte un actionneur au rendement énergétique optimal, du fait de la simplicité et de la compacité du trajet du flux, de telle sorte que le flux magnétique circulant dans le châssis perd peu d'énergie avant d'arriver aux entrefers, et du fait de l'utilisation d'un seul aimant polarisé mis en mouvement par deux champs magnétiques de sens opposés, issus d'un même flux magnétique.

Dans un mode de réalisation préféré de l'invention, le châssis comporte deux modules en U disposés en regard l'un de l'autre, autour de l'organe mobile. Chaque module comporte une paroi longitudinale prolongée à ses extrémités par deux parois transversales, avec les surfaces d'extrémité des parois transversales situées à une même extrémité longitudinale du châssis qui se regardent deux à deux, un passage d'entrefer étant ainsi formé entre deux parois transversales. On réalise ainsi de façon simple un châssis permettant de disposer les entrefers le long de l'axe de déplacement tel que décrit ci-dessus, pour entourer l'aimant permanent et permettre son déplacement linéaire tout en s'assurant qu'il reste constamment en prise dans les entrefers. On dispose aussi d'un châssis ouvert, qui permet un montage facile du châssis par rapport à l'organe mobile, et qui permet de connecter aisément des organes fonctionnels à l'organe mobile.

Selon une caractéristique préférée de l'invention, un capteur de position est solidaire du châssis, pour la détection du déplacement de l'organe mobile. Cette détection pourra être utilisée avantageusement pour ajuster le flux magnétique généré dans le châssis. On pourra prévoir de disposer ce capteur à une extrémité de l'organe mobile, à la sortie de l'actionneur, ou bien de disposer ce capteur dans le module. Là encore, la forme ouverte du châssis permet de positionner facilement le capteur à l'intérieur du module dans une position permettant cette mesure du déplacement.

Selon l'invention, le flux magnétique est généré par plusieurs bobines placées respectivement autour d'une paroi du châssis et alimentées électriquement de manière à ce que chaque bobine génère un flux magnétique semblable, qui circule en boucle simple dans le châssis.

Ainsi, on peut choisir le nombre de bobines que l'on souhaite alimenter, sans pour autant modifier le trajet du flux magnétique créé par cette alimentation. On peut additionner les flux et les concentrer dans un même parcours, en boucle simple, ce qui augmente le rendement de l'actionneur.

Selon une caractéristique préférée de l'invention, les positions extrêmes de l'organe mobile sont déterminées par des moyens de butée axiale mécaniques, de manière à former des positions stables de repos de l'organe mobile lorsque les bobines ne sont plus alimentées électriquement. Puisque les champs magnétiques créés dans les entrefers, entre lesquels est disposé l'aimant, sont de sens opposés, des forces de répulsion d'un des champs sur l'aimant et des forces d'attraction de l'autre champ sur ce même aimant s'additionnent pour pousser l'aimant mobile vers cette position extrême de l'organe mobile, contre les moyens de butée axiale. On bloque ainsi l'aimant dans une position déterminée, dans laquelle les extrémités de l'aimant restent logées respectivement dans leur entrefer associé, de manière à rendre l'aimant prêt à se déplacer dans l'autre sens si le courant dans les bobines est inversé.

Selon des caractéristiques particulièrement avantageuses de l'invention, l'organe mobile peut comporter une pièce magnétique rapportée sur l'organe mobile à distance de l'aimant permanent, de manière à ce que cette pièce magnétique s'étend hors du châssis quelle que soit la position de l'organe mobile, d'une position extrême à l'autre. Dans un mode de réalisation particulier, la pièce magnétique rapportée présente une dimension transversale supérieure à celle des entrefers, de manière à former en outre un moyen de butée axiale mécanique de l'organe mobile.

Selon une caractéristique avantageuse de l'invention, l'actionneur comporte des moyens pour rendre dissymétriques les positions de repos et privilégier une position de repos plutôt qu'une autre. On pourra prévoir des moyens mécaniques par exemple avec des ressorts pour appeler en position l'organe mobile, ou bien encore des moyens magnétiques qui pourront être formés avantageusement par une pièce magnétique telle qu'elle a été évoquée ci-dessus. Il sera compris qu'il est bien sur possible de les associer, notamment pour assurer une sûreté de fonctionnement de l'actionneur.

Dans le cadre d'une application spécifique de l'actionneur à un moteur à combustion, l'organe mobile est amené à être relié à une tige de soupape. Avantageusement, on fait correspondre la position de repos privilégiée de l'actionneur telle qu'elle a décrite ci-dessus à la position fermée de la soupape. On peut ainsi éviter, dans le cas d'un dysfonctionnement de l'alimentation électrique, de laisser la soupape en position ouverte et de risquer par exemple que le piston vienne taper la soupape.

D'autres caractéristiques et avantages de l'invention ressortiront plus précisément de la description qui suit, description illustrée par les figures suivantes :
- la figure 1, qui est une représentation éclatée en perspective d'un actionneur électromagnétique selon un premier mode de réalisation de l'invention, avec quatre bobines montées sur deux modules d'un châssis ferro-magnétique entre lesquels coulisse un organe mobile portant dans une cage un unique aimant ;
- les figures 2 et 3, qui sont des vues en coupe dans un plan horizontal de l'actionneur de la figure 1, dans laquelle la cage n'a pas été représentée pour la clarté de la figure, et dans laquelle est rendue visible aussi bien la circulation dans le châssis du flux magnétique créé par les bobines lorsqu'elles sont alimentées électriquement, dans un sens ou dans l'autre, que les forces d'attraction et de répulsion exercées sur l'aimant ;

- les figures 4 et 5, qui sont des représentations de l'actionneur, dans une vue similaire à celle des figures 2 et 3, dans une position de repos respectivement proximale et distale, lorsque les bobines ne sont plus alimentées électriquement ;
- et les figures 6 et 7, qui sont des représentations d'un actionneur selon un deuxième mode de réalisation de l'invention, dans une vue similaire à celle des figures 2 et 3, avec respectivement un et deux éléments magnétiques rapportés sur la pièce mobile.

On va décrire par la suite un actionneur linéaire électromagnétique 1 de l'invention dans son application à l'entraînement d'une tige de soupape 2 de moteur à combustion. Il sera compris que sans sortir du contexte de l'invention, l'actionneur pourra être relié à un autre organe qu'une soupape en présentant les mêmes avantages de fonctionnement.

La soupape et l'organe mobile sont adaptés à se déplacer ici suivant un axe X-X', visible sur les figures.

Ici, le déplacement de l'organe mobile commande le déplacement de la soupape entre une position fermée, dans laquelle la tête de soupape rend hermétique la chambre de combustion du moteur, et une position ouverte dans laquelle le dégagement de la tête de soupape, pour permettre la communication entre un conduit d'admission ou d'échappement et la chambre de combustion, est maximal.

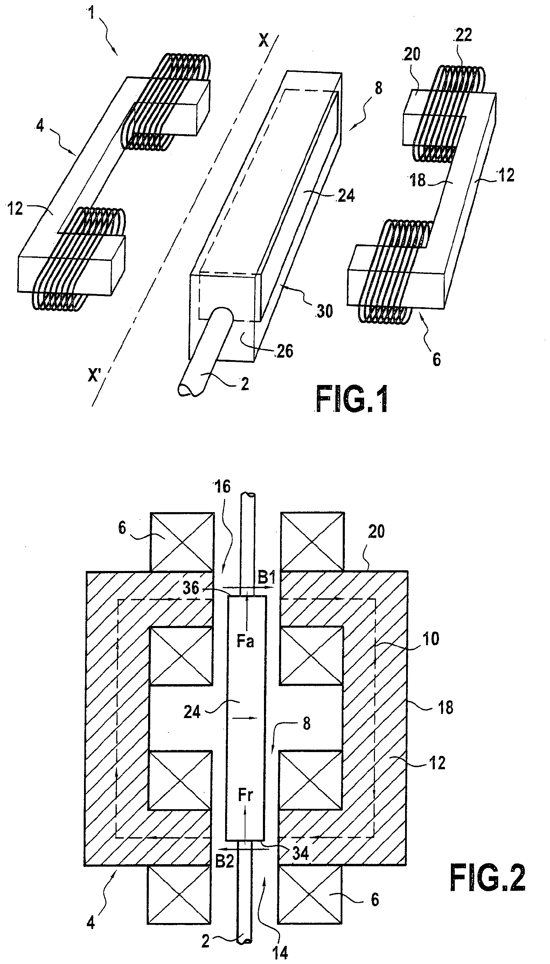

Comme illustré sur la figure 1, un actionneur 1 comporte un châssis 4 porteur de bobines électromagnétiques 6 ainsi qu'un organe mobile 8 adapté à se déplacer linéairement à l'intérieur du châssis selon l'axe de déplacement X-X', sous l'effet d'un flux magnétique 10 généré dans le châssis.

Le châssis est formé de deux modules 12 en forme de U qui sont disposés en regard l'un de l'autre de manière à former un circuit magnétique comportant deux entrefers 14, 16. On appellera par la suite entrefer proximal 14 l'entrefer qui est orienté vers la soupape ou tout autre organe à actionner, et on appellera entrefer distal 16 l'entrefer qui est à l'opposé de cette soupape.

Chaque module en forme de U comporte une paroi longitudinale 18 qui s'étend suivant l'axe X-X' et qui se prolonge transversalement à chacune de ses extrémités par une paroi transversale 20.

Le châssis se monte en rapportant l'un en face de l'autre les modules, autour de l'organe mobile. Le châssis étant ouvert, il est également possible de monter le châssis en fixant les modules en position puis d'insérer l'organe mobile à l'intérieur entre les modules ultérieurement. Une fois en place, le châssis comporte deux parois longitudinales parallèles, et les deux modules sont orientés l'un vers l'autre de sorte que les parois transversales se regardent deux à deux, en laissant, à chaque extrémité longitudinale du châssis, un passage formant entrefer.

On prévoit avantageusement un capot (non représenté sur les figures) qui vient recouvrir l'actionneur, pour protéger les parties des bobines situées à l'extérieur du châssis, et empêcher ainsi la dispersion du flux électromagnétique à l'extérieur du châssis lorsque les bobines sont alimentées électriquement.

Le châssis 4 est formé dans un matériau ferro-magnétique. Il supporte quatre bobines électromagnétiques 6 montées respectivement autour d'une partie du circuit magnétique en vue de créer un flux magnétique dans le châssis. Les bobines sont formées par un enroulement de spires électromagnétiques 22. Comme illustré, elles sont disposées respectivement autour d'une paroi transversale et chacune des bobines prend appui en partie contre une des parois longitudinales du châssis, ce qui permet à la fois d'assurer la mise en place par butée des bobines et de faciliter leur refroidissement.

L'axe des bobines est sensiblement parallèle aux parois transversales et il est orthogonal à l'axe de déplacement X-X'. La disposition des bobines autour des parois transversales permet de proposer un actionneur fin dans la direction transversale.

Les bobines comportent des moyens d'alimentation électrique (non représentés) qui sont reliés à un circuit de commande (non représenté). Il sera compris qu'un ou plusieurs circuits de commande peuvent être utilisés pour le pilotage électrique des bobines. On peut avantageusement soit prévoir un circuit de commande propre à chaque bobine, soit prévoir un seul circuit de commande pour piloter l'ensemble des bobines en série et/ou en parallèle, dans un actionneur à moindre coût par exemple. Dans ce dernier cas, on observe que plusieurs agencements de connexion sont possibles sans sortir du contexte de l'invention et que le montage des bobines en parallèle et/ou en série ne modifie pas le principe de fonctionnement de l'actionneur à boucle simple de flux mais permet de dimensionner la quantité de courant débité.

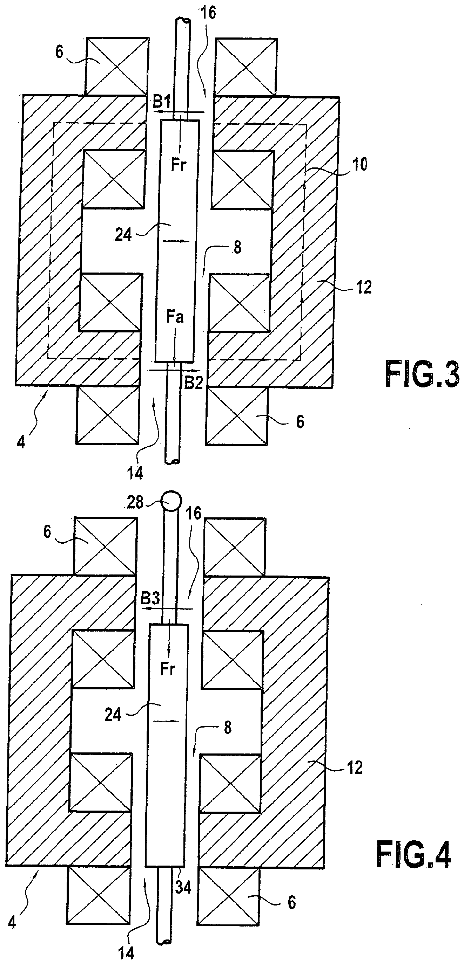

La forme du châssis, c'est à dire ici la forme des modules le constituant, fait que lorsque les bobines sont alimentées électriquement, le flux magnétique 10 (visible sur les figures 2 et 3) est généré de sorte qu'il suit un parcours en boucle simple qui passe successivement par toutes les parois d'un module 12, de l'entrefer proximal 14 à l'entrefer distal 16, puis successivement par toutes les parois de l'autre module, cette fois de l'entrefer distal à l'entrefer proximal, pour revenir ensuite à son point de départ, en formant des champs magnétiques dans les entrefers lorsqu'il passe d'un module à l'autre, ces champs magnétiques étant ici transversaux à l'axe de déplacement X-X'. Tel qu'illustré sur les figures 2 et 3, on observe qu'un champ magnétique B₁ règne dans l'entrefer distal 16, et qu'un champ magnétique B₂ règne dans l'entrefer proximal 14.

Avantageusement, quelle que soit la position de départ du flux, c'est à dire quelle que soit la position de la bobine alimentée électriquement, le parcours en boucle simple du flux reste le même et la direction transversale des champs magnétiques reste la même. Le sens du flux et des champs magnétiques dans les entrefers dépend du signe du courant d'alimentation des bobines. Pour un même signe de courant, on peut constater que le parcours de flux est le même que l'on parte de l'une ou de l'autre des bobines. Il en résulte que, pour un même signe de courant d'alimentation, le parcours de ce flux reste le même, que l'on soit dans le cas de quatre bobines alimentées simultanément ou dans le cas d'une unique bobine alimentée.

On peut dès lors choisir de n'alimenter qu'une seule bobine dans un mode à moindre intensité et d'alimenter plus ou moins de bobines selon la rapidité de réponse de l'actionneur souhaitée.

Le fait d'avoir un parcours de flux identique quelle que soit la bobine alimentée permet de proposer une sûreté de fonctionnement pour que le dispositif puisse fonctionner avec une unique bobine, en dimensionnant chaque bobine à cet effet. On peut ainsi fonctionner avec une bobine lors d'une défection éventuelle des autres bobines et ce jusqu'à leur remplacement.

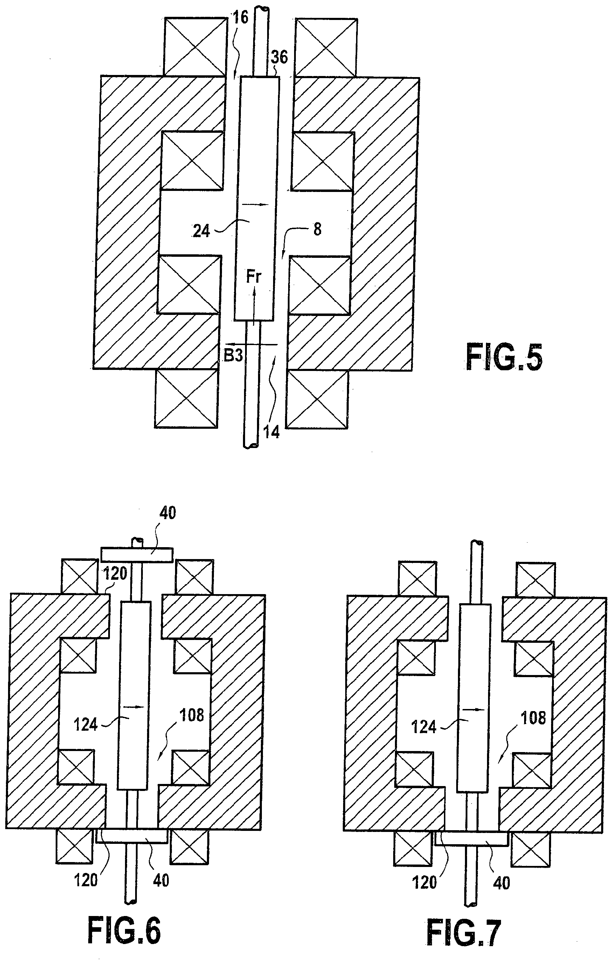

L'organe mobile est adapté à se déplacer linéairement, sous l'effet des champs magnétiques décrits ci-dessus, entre une position extrême distale (visible sur la figure 5) qui correspond à la position soupape fermée dans la présente application de l'actionneur, et une position extrême proximale (visible sur la figure 4), qui correspond à la position soupape ouverte. Le déplacement de l'organe mobile et de la tige de soupape associée peut être guidé par des moyens de guidage axial ici non représentés.

L'organe mobile 8 comporte un aimant permanent 24 logé dans une cage 26 qui entoure l'aimant et à une extrémité de laquelle on vient visser la tige de soupape 2 de manière à rendre la soupape solidaire en déplacement axial de l'organe mobile. A l'extrémité opposée, on prévoit (tel que cela est visible sur la figure 4) le montage d'un capteur de position 28, par exemple par effet Hall, adapté à coopérer avec un carter ici non représenté, qui vient chapeauter l'extrémité de l'organe mobile en saillie du châssis. Le capteur de positon pourra en variante être intégré dans les modules entre les bobines de manière à éviter l'encombrement d'un carter supplémentaire. Il devra dans ce cas se trouver dans une zone neutre où on ne voit que la variation du champ de l'aimant. L'agencement de l'actionneur selon l'invention, dans lequel le flux magnétique circule en boucle simple; uniquement sur la périphérie du châssis, permet de générer cette zone neutre entre les bobines, dans le creux des modules en U.

La cage, visible sur la figure 1, présente une forme globalement parallélépipédique, dont la dimension transversale est légèrement inférieure à l'épaisseur transversale de l'entrefer, c'est à dire à la distance entre les parois transversales en regard des modules du châssis, de manière à permettre le déplacement linéaire de l'organe mobile sans frottement contre les parois transversales. On pourra prévoir de réaliser la cage par surmoulage sur l'aimant permanent, étant entendu qu'il convient, comme cela sera décrit ci après, que l'aimant permanent 24 débouche sur les flancs transversaux de la cage 30. La cage est réalisée dans un matériau non conducteur magnétiquement, et par exemple en aluminium.

L'aimant permanent est polarisé suivant une direction transversale sensiblement parallèle aux champs magnétiques B₁ et B₂ régnant respectivement dans les entrefers. Cet aimant présente une épaisseur égale à l'épaisseur de la cage de telle sorte qu'il ne soit pas, dans cette direction transversale, recouvert par la cage et qu'il débouche des deux côtés, en regard de chacune des parois transversales formant entrefer.

L'aimant permanent présente une dimension longitudinale, selon l'axe de déplacement X-X', sensiblement égale à la distance entre le centre de l'entrefer distal 16 et le centre de l'entrefer proximal 14. De la sorte, lorsque l'aimant permanent est en place dans le châssis, on peut s'assurer, par des moyens de butée axiale notamment, que chacune des extrémités de l'aimant soit toujours en place dans l'entrefer associé et que les champs magnétiques génèrent à la fois une force de répulsion Fᵣ et une force d'attraction Fₐ sur l'aimant.

Dans la position extrême distale, illustrée sur la figure 5, on s'assure ainsi par des moyens de butée axiale que l'extrémité distale de l'aimant 36 n'aille pas au-delà de l'entrefer distal 16, à l'extérieur du châssis, et que l'extrémité proximale de l'aimant 34 n'aille pas au-delà de l'entrefer proximal 14, à l'intérieur des modules en U. On pourra même prévoir dans un montage sécurisé que dans la position extrême, les extrémités des aimants ne soient pas affleurantes avec les parois des modules, mais légèrement en retrait, dans les entrefers. Et on comprend que l'on prévoit des moyens équivalents pour s'assurer du bon agencement de l'aimant dans la position extrême proximale.

L'aimant permanent, et par la suite la tige de soupape, est apte à se déplacer linéairement, selon l'axe de déplacement X-X', sous l'effet des champs magnétiques B₁ et B₂. On comprend que l'aimant permanent est soumis à une force électromagnétique de Laplace selon une direction qui est transversale à l'axe X-X' et qu'il convient de choisir le sens que l'on souhaite donner à cette force électromagnétique pour déterminer le sens de déplacement de l'aimant permanent, en tenant compte à la fois du sens du champ magnétique généré par l'aimant et du sens des champs magnétiques créés par les bobines dans les entrefers. Ici, le sens de l'aimant permanent est fixé et c'est le sens du courant circulant dans les bobines qui est variable. Tel qu'illustré sur les figures 2 à 6, on a choisi dans ce mode de réalisation un aimant permanent qui est polarisé de la gauche vers la droite. Ce sont les circuits de commande associés aux bobines qui permettent de changer le sens des courants dans les bobines et par suite le sens des champs magnétiques dans les entrefers, et qui permettent donc de changer l'orientation des forces de répulsion et des forces d'attraction exercées sur l'aimant permanent.

On va maintenant décrire l'utilisation de l'actionneur.

Lorsque l'on alimente les bobines en courant électrique, un champ magnétique B₁ règne dans l'entrefer distal et un champ magnétique B₂ règle dans l'entrefer proximal. Comme décrit précédemment, puisqu'il est formé, selon l'invention, une unique boucle simple de flux, les deux champs magnétiques sont de sens opposés. Par la suite de la description, et tel que cela est illustré sur la figure 2, les circuits de commande génèrent un sens de courant tel que le champ magnétique B₁ dans l'entrefer distal est de même sens que celui de l'aimant permanent et tel que le champ magnétique B₂ dans l'entrefer proximal est de sens opposé à celui de l'aimant permanent. L'aimant est alors attiré vers le champ de même sens, tel que cela est schématisé sur la figure par la représentation des forces d'attraction Fₐ, alors que le champ magnétique de sens opposé à la polarisation de l'aimant repousse l'aimant, tel que cela est schématisé sur la figure par la représentation de forces de répulsion Fᵣ.

L'organe mobile 8 et la tige de soupape 2 sont ainsi déplacés linéairement le long de l'axe X-X' en suivant le mouvement de l'aimant permanent 24. On comprend qu'ici, le déplacement axial de l'organe mobile vers l'entrefer proximal 14 entraîne l'ouverture de la soupape tandis que son déplacement vers l'entrefer distal 16 entraîne la fermeture de la soupape.

La forme de l'actionneur, dans lequel l'organe mobile est adapté à se déplacer entre les deux entrefers traversés par un même flux magnétique en sens contraire, assure que cette force de répulsion par rapport à un champ magnétique et cette force d'attraction par rapport à l'autre champ magnétique s'additionne dans un même sens pour participer au déplacement rapide et réactif de l'organe mobile, ce qui assure un bon rendement à l'actionneur.

On pilote le sens du déplacement linéaire de l'organe mobile en fonction du sens de courant. On comprend qu'en inversant le courant dans les bobines, on inverse l'effort et donc le sens de déplacement de l'organe mobile. Dans le cas où chaque bobine a son propre circuit de commande, on pourra jouer sur le sens du courant envoyé dans chacune des bobines afin de jouer sur l'intensité du flux magnétique et donc sur la rapidité de déplacement de l'organe mobile.

En fonction de l'intensité du courant électrique dans les bobines, les forces de répulsion et d'attraction sont plus ou moins grandes et le déplacement axial de l'organe mobile selon l'axe de déplacement X-X', dans un sens ou dans l'autre, est plus ou moins important.

On crée ainsi le déplacement en translation de l'organe mobile dès l'introduction du courant dans les bobines. Plus précisément, on gère d'une part le sens de déplacement de l'aimant permanent et d'autre part la vitesse de ce déplacement, en pilotant d'une part le sens et d'autre part l'intensité du courant introduit dans les bobines.

Pour une valeur déterminée de l'intensité du courant alimentant les bobines, l'organe mobile atteint une position axiale d'équilibre déterminée, entre la position extrême distale et la position extrême proximale. L'actionneur selon l'invention permet donc une levée variable de la soupape en commandant l'intensité d'alimentation des bobines pour piloter un déplacement variable de l'aimant permanent entre deux positions extrêmes.

On a selon l'invention deux positions extrêmes, respectivement au niveau de l'entrefer distal et de l'entrefer proximal, qui sont atteintes selon le sens que l'on donne au courant d'alimentation des bobines.

Il est particulièrement avantageux de pouvoir maintenir ces positions extrêmes au repos, c'est-à-dire lorsque le courant électronique est coupé et ne circule pas dans les bobines.

On a représente en figure 4 et 5 ces positions au repos de l'organe mobile. En l'absence de courant électrique dans les bobines, donc en l'absence de champ magnétique dans les entrefers, l'aimant permanent tend à se déplacer le long de l'axe X-X' pour se centrer axialement dans l'entrefer distal ou proximal, selon la position qu'occupait l'aimant au moment où le courant a été coupé. Si l'aimant était proche de l'entrefer distal, il tend à venir se loger dans l'entrefer distal, alors que si l'aimant était proche de l'entrefer proximal, il tend à venir se loger dans l'entrefer proximal.

En effet, le flux magnétique créé par l'aimant cherche à former une boucle fermée. Le circuit formé par le châssis électromagnétique permet à ce flux magnétique, lorsque l'aimant est logé dans l'un des entrefers, de former une boucle en circulant dans le châssis électromagnétique plutôt que dans de l'air, de manière à minimiser la dispersion du flux magnétique.

La position de repos de l'organe mobile est déterminée magnétiquement par l'attraction de l'aimant dans l'entrefer et mécaniquement par des éléments de butée axiale, par exemple par la butée de la soupape qui repose dans sa position fermée contre sa portée dans la culasse. On comprendra que les différents éléments de butée axiale envisageables, que ce soit au contact de la tige de culasse ou de la cage de l'organe mobile, n'ont pas été représentés.

Dans cette position de repos, l'aimant permanent cherche à se centrer sur l'entrefer le plus proche, et les moyens de butée axiale permettent qu'il n'atteigne pas cette position centrée mais qu'il reste dans la position extrême, sans aller au-delà de cet entrefer de manière à ce que l'extrémité opposée de l'aimant reste dans le même temps en prise dans l'autre entrefer.

La position est rendue stable par le champ magnétique additionnel B₃ (visible sur les figures 4 et 5) qui se crée dans l'entrefer dans lequel l'aimant n'est pas logé. On comprend que ce champ additionnel est de sens inverse à celui de la polarisation de l'aimant, du fait de la forme en U des modules formant châssis et de la circulation en boucle fermée du champ créé par l'aimant, et qu'il se crée ainsi une force de répulsion s'additionnant à l'effort de l'aimant pour venir se centrer dans l'entrefer, de manière à ce que cette addition de forces pousse l'aimant mobile contre les moyens de butée axiale.

On peut ainsi obtenir selon l'invention deux positions de repos symétriques, particulièrement stables.

On va maintenant décrire un deuxième mode de réalisation, illustré à la figure 6, dans lequel le châssis et les bobines restent inchangés par rapport au mode de réalisation précédemment décrit, et dans lequel l'organe mobile 108 comporte comme précédemment un aimant permanent 124, logé de manière préférée dans une cage (ici non représentée mais de forme sensiblement similaire à celle de la cage représentée sur la figure 1).

On prévoit en outre, dans ce deuxième mode de réalisation, des pièces rapportées magnétiques 40, disposées sur l'organe mobile, de part et d'autre à distance de l'aimant permanent. Les pièces rapportées peuvent être fixées sur ou à distance de la cage, ou bien elles peuvent, elle aussi, être noyées dans la cage, dès lors qu'elles se tiennent à une distance déterminée de l'aimant sur l'axe de déplacement.

Quelle que soit leur position sur cet axe par rapport à l'aimant, il convient que chacune des pièces magnétiques soient positionnées hors du châssis, avec une pièce magnétique proximale et une pièce magnétique distale, associées respectivement à l'entrefer proximal et l'entrefer distal, pendant que l'aimant est à l'intérieur de ce châssis, entre les entrefers.

Ainsi, lorsque les bobines sont alimentées électriquement, comme décrit dans le premier mode de réalisation, l'aimant tend à se positionner dans l'un ou l'autre des entrefers selon le sens du courant et donc du flux magnétique. Ce déplacement linéaire de l'aimant tend à éloigner une pièce magnétique de l'entrefer associé et tend à rapprocher l'autre pièce magnétique de l'entrefer associé. Un des aimants vient alors à proximité des parois transversales du châssis, tel que cela est visible sur la figure 6 avec la pièce magnétique proximale à proximité des parois du châssis alors que l'aimant est positionné dans l'entrefer distal.

Ces pièces magnétiques sont ainsi particulièrement utiles à tour de rôle lorsque les bobines sont alimentées en courant dans un sens puis dans l'autre, d'une part car l'attraction alternée des pièces magnétiques sur le châssis ajoute un effort supplémentaire pour maintenir les positions extrêmes alternées de l'aimant dans l'entrefer correspondant et d'autre part car elles peuvent permettre de diminuer le courant à fournir pour obtenir cette position extrême, en accompagnant le mouvement de l'organe mobile.

D'autre part, ces pièces magnétiques sont également utiles lorsque les bobines ne sont plus alimentées en courant, car elles favorisent d'une part le déplacement de l'aimant vers l'une des positions de repos, c'est à dire celle dont l'aimant est le plus proche au moment de l'arrêt de l'alimentation comme cela a été décrit précédemment, et car elles créent d'autre part un effort qui tend à pousser l'aimant permanent en butée lorsque celui-ci est dans sa position extrême, permettant d'assurer une position stable au repos.

On comprendra que les pièces magnétiques sont dimensionnées pour s'assurer qu'elles seront attirées par le châssis, sans pour autant perturber l'attraction et la répulsion de l'aimant par rapport aux entrefers tel que cela a été décrit précédemment dans le premier mode de réalisation.

Les pièces rapportées permettent en outre d'atténuer la dispersion dans l'air du rayonnement des bobines, en formant un blindage du champ magnétique du côté du châssis où elles s'étendent. Le champ magnétique peut ainsi être concentré de façon plus intense dans le circuit magnétique et par extension sur l'aimant.

Dans le cas (représenté à la figure 6) où les pièces rapportées ne sont pas montées dans la cage mais directement sur des tiges rendues solidaires de l'aimant par exemple, les pièces rapportées peuvent également servir de butée axiale dès lors qu'elles présentent une dimension transversale supérieure à celle de l'entrefer correspondant, de manière à venir en butée contre les parois transversales 120 du châssis.

Dans le cadre de l'application décrite à une soupape de moteur à combustion, il est particulièrement avantageux de privilégier une des positions de repos par rapport à l'autre, de manière à ce que la position de repos unique corresponde par exemple à une position fermée de la soupape, afin d'éviter qu'un des pistons du moteur ne vienne percuter dans son cycle la soupape correspondante restée ouverte et en saillie dans la chambre de combustion. Tel que cela a été décrit précédemment, c'est la position extrême distale qui correspond ici à la position fermée de la soupape et dans ce mode de réalisation particulier de l'invention, illustré sur la figure 7, il est donc recherché une position de repos privilégiée dans laquelle l'aimant permanent vient à tous les coups se loger dans l'entrefer distal, quelle que soit la positon de l'aimant au moment de l'arrêt de l'alimentation. On comprendra que la recherche d'une position de repos privilégiée pourra également être intéressante dans d'autres applications de l'actionneur selon l'invention.

On prévoit dès lors des moyens pour rendre dissymétriques les positions de repos et en privilégier une par rapport à l'autre. Ces moyens peuvent être mécaniques ou magnétiques et il va être décrit par la suite des moyens magnétiques formés par une pièce magnétique rapportée telle qu'elle a été présentée ci-dessus dans le deuxième mode de réalisation. Des moyens mécaniques pourraient venir en remplacement ou en complément, en ajoutant la présence d'un ressort de rappel par exemple.

Comme cela a été vu précédemment, la pièce rapportée est positionnée pour se tenir à distance déterminée de l'aimant, de telle sorte que, lorsque l'aimant est en position extrême, attiré par l'entrefer distal, la pièce rapportée est au-delà de l'actionneur, de l'autre côté selon l'axe X-X' de l'entrefer proximal.

Quelle que soit la position de l'organe mobile, le fait de couper le courant électrique d'alimentation des bobines rappelle automatiquement l'organe mobile vers sa position de repos privilégiée, l'aimant permanent tendant à venir se replacer dans l'entrefer distal où il n'y a plus de champ magnétique, poussé vers cet entrefer distal plutôt que vers l'entrefer proximal par l'attraction de la pièce rapportée vers les parois transversales délimitant l'entrefer proximal du châssis.

L'usage de cette pièce magnétique présente là aussi des avantages relatifs à l'effort supplémentaire permettant d'assurer une position extrême stable, à la diminution du courant à fournir pour obtenir cette position extrême, à la formation d'un blindage du champ magnétique ou à la réalisation d'une butée axiale.

On comprend qu'ici on a privilégié une position de repos qui correspond à une position fermée de la soupape, mais que la simplicité de conception de l'actionneur selon l'invention permet de privilégier une position de repos par rapport à l'autre à la demande. Il suffira de placer la pièce magnétique sur l'organe mobile, au-delà de l'entrefer distal, pour favoriser le positionnement au repos de l'aimant permanent dans l'entrefer proximal.

Dans le cas où une seule pièce magnétique est rapportée, on comprendra qu'elle pourra être disposée telle que représentée sur la figure 7, entre l'aimant et l'organe à actionner, ici une soupape, de manière à ce que l'entrefer proximal sépare l'aimant et la pièce rapportée, ou bien qu'elle pourra dans un fonctionnement miroir, être disposée de manière à ce que ce soit l'entrefer distal qui sépare l'aimant et la pièce rapportée, celle-ci étant toujours positionnée en dehors du châssis. On va décrire le fonctionnement de l'agencement illustré figure 7, et on comprendra qu'il est le même si la pièce magnétique est disposée de l'autre côté du châssis.

La description qui précède explique clairement comment l'invention permet d'atteindre les objectifs qu'elle s'est fixés. En particulier, l'actionneur selon l'invention présente une conception simple et légère, avec des modules en forme en U disposés l'un en face de l'autre. Cela offre des possibilités multiples pour le montage : on peut parallèlement préparer le montage des bobines sur le châssis ferro-magnétique et le montage de la cage avec la tige de soupape. On assemble facilement le châssis autour de la cage, sans qu'il soit nécessaire de percer des trous dans des parois du châssis pour permettre le passage de la tige. On crée ainsi de façon aisée l'agencement avantageux de l'invention dans lequel un aimant permanent est adapté à se déplacer entre deux entrefers formés par le châssis et dans lesquels règnent des champs de sens opposés, grâce à la forme en boucle du parcours du flux du fait des formes en U des modules.

Le fait que l'actionneur présente une unique boucle de flux magnétique, qui reste la même quelle que soit la bobine alimentée, permet ainsi de conserver le même parcours de flux quelles que soient les bobines alimentées. On facilite des opérations de remplacement d'une bobine sans que le fonctionnement de l'actionneur soit modifié. On obtient un champ magnétique de l'intensité souhaitée en jouant sur le nombre de bobines alimentées, sans que ce nombre modifie le parcours du flux généré. Avantageusement, ce parcours est simple, formant une boucle, et court. Il n'y a pas de perte d'énergie significative lors du parcours de sorte que les champs magnétiques régnant dans l'entrefer sont forts. Le rendement de l'actionneur est alors très bon et la quasi-totalité de l'énergie électrique utilisée pour l'alimentation des bobines sert au déplacement de l'aimant mobile par la répulsion et l'attraction des champs magnétiques.

En outre, le fait d'avoir un unique aimant permet de limiter les risques au montage d'une mauvaise orientation des polarisations, ce qui est particulièrement important dans la programmation des actionneurs, notamment dans le cas d'application à des déplacements de soupape, tel que cela a été décrit précédemment, où l'on souhaite privilégier une position de repos par rapport à l'autre.

On pourrait prévoir un nombre et un agencement différent des bobines, avec par exemple deux bobines disposées axialement autour des parois longitudinales, s'il y a plus de place pour loger l'actionneur, étant entendu que dans cette variante, on forme là aussi une boucle simple de flux avec deux entrefers entre lesquels est adapté à se déplacer linéairement un aimant permanent.

Dans une variante non représenté, on pourra prévoir que l'actionneur présente une forme cylindrique obtenue à partir du châssis et de l'organe mobile illustrés sur la figure 1. On fait tourner le profil des deux modules et de l'aimant permanent autour d'un axe parallèle à l'axe de déplacement et disposé à l'extérieur du châssis. On obtient de la sorte un actionneur cylindrique avec, depuis son centre jusqu'à sa périphérie un module cylindrique intérieur, un aimant cylindrique de section annulaire et un module cylindrique extérieur. Une bobine peut être logée au centre de l'actionneur et générer un flux magnétique en boucle simple entre les deux modules coaxiaux. L'aimant permanent reste placé, conformément à l'enseignement de l'invention, axialement entre les deux entrefers.

Dans une variante non représentée, on pourra prévoir que l'actionneur permet un déplacement de l'organe mobile le long d'un axe de déplacement courbe. L'actionneur comporte à cet effet un organe mobile qui présente un rayon de courbure équivalent à la courbure de l'axe de déplacement. Le châssis pourra présenter si nécessaire, selon le plan dans lequel est compris cet axe courbe, des entrefers courbés pour que l'aimant dans son déplacement ne heurte pas les parois délimitant ces entrefers. Comme précédemment, cette variante présente là aussi l'avantage d'un flux magnétique circulant en une unique boucle simple et un aimant permanent disposé à l'intérieur du châssis entre deux entrefers disposés sur le circuit magnétique qu'emprunte ce flux.

L'invention ne saurait toutefois se limiter aux modes de réalisation spécifiquement décrits dans ce document, et s'étend en particulier à tous moyens équivalents et à toute combinaison techniquement opérante de ces moyens. On pourra notamment réaliser l'actionneur dans un souci d'intégration à un système existant en utilisant des pièces existantes pour réaliser les fonctions de châssis magnétique et d'organe mobile aimanté. Par exemple, on pourra réaliser le châssis par des formes appropriées de la culasse d'un moteur, et prévoir une partie aimantée à intégrer à la tige de soupape pour former l'organe mobile.

## Revendications

1. Actionneur électromagnétique, dans lequel un organe mobile (8; 108) est adapté à coulisser à l'intérieur d'un châssis ferro-magnétique (4) selon un axe de déplacement (X-X') déterminé entre deux positions extrêmes sous l'effet d'un flux magnétique (10) circulant dans ledit châssis,
ledit châssis formant un circuit magnétique en boucle simple interrompu par deux entrefers (14, 16) disposés chacun sur ledit axe de déplacement de l'organe mobile, de manière à ce que le flux magnétique circule en une unique boucle simple dans le châssis et de manière à ce qu'il génère au niveau des entrefers deux champs magnétiques (B1, B2) de sens opposés, chaque champ magnétique s'étendant transversalement audit axe de déplacement déterminé,
l'organe mobile comportant un aimant permanent (24; 124), polarisé dans un sens déterminé et **caractérisé en ce que** l'aimant permanent présente une dimension axiale, selon l'axe de déplacement, sensiblement égale à la distance entre le centre de chacun des deux entrefers, la dimension axiale étant telle que dans chaque position extrême, une extrémité de l'aimant (34) s'étend dans un des entrefers (14) tandis que l'extrémité opposée de l'aimant (36) s'étend dans l'autre entrefer (16).

2. Actionneur selon la revendication 1, **caractérisé en ce que** le châssis (4) comporte deux modules en U (12) disposés en regard l'un de l'autre, autour de l'organe mobile (8; 108), chaque module comportant une paroi longitudinale (18) prolongée à ses extrémités par des parois transversales (20; 120), avec les surfaces d'extrémité des parois transversales situées à une même extrémité longitudinale du châssis qui se regardent deux à deux, à distance l'une de l'autre, de manière à former les entrefers (14,16).

3. Actionneur selon la revendication 1 ou 2, **caractérisé en ce qu'**un capteur de position (28) est solidaire du châssis (4), pour la détection du déplacement de l'organe mobile (8; 108).

4. Actionneur selon l'une des revendications précédentes, **caractérisé en ce que** le flux magnétique (10) est généré par plusieurs bobines (6) placées respectivement autour d'une paroi du châssis (4) et alimentées électriquement de manière à ce que chaque bobine génère un flux magnétique semblable, qui circule en boucle simple dans le châssis.

5. Actionneur selon la revendication précédente, **caractérisé en ce que** lesdites positions extrêmes de l'organe mobile (8; 108) sont déterminées par des moyens de butée axiale mécaniques, de manière à former des positions stables de repos de l'organe mobile lorsque les bobines (6) ne sont plus alimentées électriquement, des forces de répulsion (Fᵣ) d'un des champs (B₁, B₂) sur l'aimant (24; 124) et des forces d'attraction (Fₐ) de l'autre champ sur ce même aimant s'additionnant pour pousser l'aimant permanent et l'organe mobile contre lesdits moyens de butée axiale.

6. Actionneur selon l'une des revendications précédentes, **caractérisé en ce que** l'organe mobile comporte une pièce magnétique (40) rapportée sur l'organe mobile (108) à distance de l'aimant permanent (124), de manière à ce que ladite pièce magnétique s'étende hors du châssis (4) quelle que soit la position de l'organe mobile d'une position extrême à l'autre.

7. Actionneur selon la revendication précédente, **caractérisé en ce que** ladite pièce magnétique rapportée (40) présente une dimension transversale supérieure à celle des entrefers (14, 16), de manière à former un moyen de butée axiale mécanique de l'organe mobile (108).

8. Actionneur selon l'une des revendications précédentes, **caractérisé en ce qu'**il comporte des moyens pour rendre dissymétriques les positions de repos et privilégier une position de repos plutôt qu'une autre.

9. Actionneur selon l'une des revendications 6 à 8, **caractérisé en ce que** l'organe mobile (8; 108) est relié à une tige de soupape (2) de moteur à combustion, avec la position de repos privilégiée correspondant à la position fermée de la soupape.

## Patentansprüche

1. Elektromagnetisches Stellglied, wobei ein bewegliches Organ (8, 108) so gestaltet ist, dass es sich im Innern eines ferromagnetischen Rahmens (4) entlang einer bestimmten Bewegungsachse (X-X') zwischen zwei Endlagen unter der Wirkung eines Magnetflusses (10), der in diesem Rahmen fließt, bewegen kann, wobei der Rahmen einen Magnetkreis in einem einfachen Kreis bildet, der durch zwei Luftspalte (14, 16) unterbrochen ist, die sich jeweils auf der Bewegungsachse des beweglichen Organs befinden, so dass der Magnetfluss in einem einzigen einfachen Kreis in dem Rahmen fließt und so, dass er an den Luftspalten zwei entgegengesetzt gerichtete Magnetfelder (B1, B2) erzeugt, wobei sich jedes Magnetfeld quer zu der bestimmten Bewegungsachse erstreckt, wobei das bewegliche Organ einen Permanentmagneten (24, 124) aufweist, der in eine bestimmte Richtung polarisiert ist, **dadurch gekennzeichnet, dass** der Permanentmagnet ein axiales Maß entlang der Bewegungsachse aufweist, das im Wesentlichen gleich dem Abstand zwischen dem Mittelpunkt jedes der beiden Luftspalte ist, wobei das axiale Maß dergestalt ist, dass sich in jeder Endlage ein Ende des Magneten (34) in einen der Luftspalte (14) erstreckt, während sich das entgegengesetzte Ende des Magneten (36) in den anderen Luftspalt (16) erstreckt.

2. Stellglied nach Anspruch 1, **dadurch gekennzeichnet, dass** der Rahmen (4) zwei U-förmige Module (12) aufweist, die einander gegenüber um das bewegliche Organ (8; 108) herum angeordnet sind, wobei jedes Modul eine Längswand (18) aufweist, die an ihren Enden durch Querwände (20, 120) verlängert ist, wobei die Endflächen der Querwände, die sich an demselben Längsende des Rahmens befinden, einander paarweise in einem Abstand voneinander zugewandt sind, so dass sie die Luftspalte (14, 16) bilden.

3. Stellglied nach Anspruch 1 oder 2, **dadurch gekennzeichnet, dass** ein Positionssensor (28) fest mit dem Rahmen (4) verbunden ist, um die Bewegung des beweglichen Organs (8, 108) zu detektieren.

4. Stellglied nach einem der vorhergehenden Ansprüche, **dadurch gekennzeichnet, dass** der Magnetfluss (10) von mehreren Spulen (6) erzeugt wird, die jeweils um eine Wand des Rahmens (4) herum angeordnet sind und elektrisch so gespeist werden, dass jede Spule einen gleichartigen Magnetfluss erzeugt, der in einem einfachen Kreis im Rahmen fließt.

5. Stellglied nach dem vorhergehenden Anspruch, **dadurch gekennzeichnet, dass** die Endlagen des beweglichen Organs (8, 108) durch mechanische Axialanschlagmittel bestimmt werden, so dass stabile Ruhelagen des beweglichen Organs gebildet werden, wenn die Spulen (6) nicht mehr elektrisch gespeist werden, wobei sich Abstoßungskräfte (Fᵣ) des einen Feldes (B₁, B₂) am Magneten (24, 124) und Anziehungskräfte (Fₐ) des anderen Feldes an demselben Magneten addieren, um den Permanentmagneten und das bewegliche Organ gegen die Axialanschlagmittel zu drücken.

6. Stellglied nach einem der vorhergehenden Ansprüche, **dadurch gekennzeichnet, dass** das bewegliche Organ ein magnetisches Teil (40) aufweist, welches am beweglichen Organ (108) vom Permanentmagneten (124) beabstandet angebracht ist, so dass sich das magnetische Teil außerhalb des Rahmens (4) erstreckt, unabhängig davon, welche Lage das bewegliche Organ von einer Endlage zur anderen einnimmt.

7. Stellglied nach dem vorhergehenden Anspruch, **dadurch gekennzeichnet, dass** das angebrachte magnetische Teil (40) ein Quermaß aufweist, das größer als das der Luftspalte (14, 16) ist, so dass es ein mechanisches Axialanschlagmittel für das bewegliche Organ (108) bildet.

8. Stellglied nach einem der vorhergehenden Ansprüche, **dadurch gekennzeichnet, dass** es Mittel aufweist, um die Ruhelagen unsymmetrisch zu machen und eine Ruhelage gegenüber einer anderen zu bevorzugen.

9. Stellglied nach einem der Ansprüche 6 bis 8, **dadurch gekennzeichnet, dass** das bewegliche Organ (8, 108) mit einem Ventilschaft (2) eines Verbrennungsmotors verbunden ist, wobei die bevorzugte Ruhelage der geschlossenen Stellung des Ventils entspricht.

## Claims

1. Electromagnetic actuator in which a mobile member (8; 108) is designed to slide inside a ferromagnetic frame (4) along a displacement axis X-X' between two end positions when exposed to a magnetic flux (10) circulating in said frame,
wherein the said frame forms a single loop magnetic circuit interrupted by two air gaps (14,16) each arranged on the said axis of displacement of the mobile member, so that the magnetic flux circulates in a single simple loop in the frame and two magnetic fields of opposite direction (B1, B2) are generated in the air gaps, with each magnetic field extending transversely to the said pre-determined axis of displacement,
and wherein the mobile member comprises a permanent magnet (24; 124), polarized in a pre-determined direction,
**characterized by** the fact that said permanent magnet has an axial dimension, along the axis of displacement, approximately equal to the distance between the center of each air gap, said axial dimension being such that in each end position, one end (34) of the magnet extends into one of the air gaps (14) and the opposite end (36) of the magnet extends into the other air gap (16).

2. Actuator according to claim 1, **characterized by** the fact that the frame (4) comprises two U-shaped modules (12) placed opposite each other and around the mobile member (8; 108), each module comprising a longitudinal wall (18) extended at the ends by transverse walls (20; 120), with the end surfaces of the transverse walls located on the same longitudinal end of the frame, each opposite the other, thus forming the air gaps (14, 16).

3. Actuator according to claim 1 or 2, **characterized by** a position sensor (28) solid with the frame (4) for detecting the displacement of the mobile member (8; 108).

4. Actuator according to one of the previous claims, **characterized by** the fact that the magnetic flux (10) is generated by several coils (6) placed respectively around one of the walls of the frame (4) and driven electrically so that each coil generates a similar magnetic flux, which circulates along a simple loop in the frame.

5. Actuator according to the previous claim, **characterized by** the fact that the said end positions of the mobile member (8; 108) are determined by mechanical axial stops, so as to create stable rest positions for the mobile member when the coils (6) are no longer driven electrically, with the repulsive forces (Fᵣ) of one of the fields (B₁, B₂) of the magnet (24; 124) and the attractive forces (Fₐ) of the other field of the same magnet combining to push the mobile magnet and the mobile member up against the said axial stops.

6. Actuator according to one of the previous claims, **characterized by** the fact that the mobile member comprises a magnetic part (40) added to the mobile member (108) away from the permanent magnet (124), so that the said magnetic part be located outside the frame (4) regardless of the position of the mobile member, from one end position to the other.

7. Actuator according to the previous claim, **characterised by** the fact that the transverse dimension of the said additional magnetic part (40) is greater than that of the air gaps (14, 16) so as to form a mechanical stop for the mobile member (108).

8. Actuator according to one of the previous claims, **characterized by** the fact that it comprises means to make the rest positions asymmetrical and give preference to one rest position rather than another.

9. Actuator according to one of claims 6 to 8, **characterised by** the fact that the mobile member (8; 108) is connected to a combustion engine valve stem (2), with the preferred rest position corresponding to the closed position of the valve.
